## Europäisches Patentamt

## European Patent Office

## Office européen des brevets

(11) Veröffentlichungsnummer: **0 332 831**
**B1**

## EUROPÄISCHE PATENTSCHRIFT

(45) Veröffentlichungstag der Patentschrift:
**18.07.90**

(21) Anmeldenummer: **89101775.8**

(22) Anmeldetag: **02.02.89**

(51) Int. Cl.⁵: **F16K 5/06**

(54) **Stellkugelhahn mit Gehäuse, Strömungskanal, Hahnkugel und Stellspindel.**

(30) Priorität: **03.03.88 DE 3806871**

(43) Veröffentlichungstag der Anmeldung:
**20.09.89 Patentblatt 89/38**

(45) Bekanntmachung des Hinweises auf die Patenterteilung:
**18.07.90 Patentblatt 90/29**

(84) Benannte Vertragsstaaten:
**AT BE CH ES FR GB GR IT LI NL SE**

(56) Entgegenhaltungen:
**EP-A- 0 069 491**
**DE-A- 3 545 547**
**US-A- 4 072 161**
**US-A- 4 099 705**
**US-A- 4 293 163**

(73) Patentinhaber: **METALPRAECIS BERCHEM + SCHABERG GESELLSCHAFT FÜR METALLFORMGEBUNG MIT BESCHRÄNKTER HAFTUNG, Osterfeldstrasse 14, D-4650 Gelsenkirchen-Ückendorf(DE)**

(72) Erfinder: **Berchem, Rütger, Dipl.-Ing.Dr.rer.pol., Wallneyer Strasse 29, D-4300 Essen 1(DE)**

(74) Vertreter: **Andrejewski, Walter, Dipl.-Phys. Dr. et al, Patentanwälte Andrejewski, Honke & Masch Postfach 10 02 54 Theaterplatz 3, D-4300 Essen 1(DE)**

# Beschreibung

Die Erfindung betrifft einen Stellkugelhahn mit Gehäuse, Strömungskanal, Hahnkugel und Stellspindel, die über mehrere Formschlußelemente in komplementäre Formschlußausnehmungen der Hahnkugel einfaßt, wobei die Formschlußelemente im Bereich des Außenrandes eines Tellers angeordnet sind, der mit der Stellspindel verbunden und auf einer Abplattung der Hahnkugel aufgesetzt ist. Bei einem Stellkugelhahn dieser Gattung (US-A 4 293 163) ist der Stellkugelhahn aus metallischen Bauteilen aufgebaut. Die Verbindung der Hahnkugel zur Stellspindel erfolgt über einen ebenfalls metallischen Teller, der angeformte Formschlußelemente aufweist, die in zugeordnete Formschlußausnehmungen der Hahnkugel einfassen.

Ferner sind Stellkugelhähne bekannt, bei denen zumindest die Hahnkugel aus nichtmetallischen Werkstoffen, insbesondere aus Ingenieurkeramik, aufgebaut ist (DE-A 3 545 547). Ingenieurkeramik ist zum Beispiel auf Basis von Sinterkorund, Metallcarbiden oder Metallnitriden aufgebaut. Diese Werkstoffe setzen sich bei Regelarmaturen, zu denen auch ein gattungsgemäßer Stellkugelhahn gehört, zunehmend durch. Ingenieurkeramik ist leicht zu bearbeiten, rostet nicht und besitzt ein geringes Gewicht und man kann damit auch ausreichende Dichtigkeit zwischen entsprechend glatt geschliffenen Oberflächen erzielen. Problematisch ist allerdings eine gewisse Sprödigkeit der Ingenieurkeramik, durch die der Belastbarkeit Grenzen gesetzt sind.

Aufgabe der Erfindung ist es, einen gattungsgemäßen Stellkugelhahn so zu verbessern, daß auch bei Einsatz von Ingenieurkeramik ein vorzeitiger Bruch des Materials nicht mehr auftritt, wenn bei Stellbewegungen große Drehmomente aufgebracht werden müssen.

Diese Aufgabe wird dadurch gelöst, daß zumindest die Hahnkugel aus Ingenieurkeramik besteht, daß der Durchmesser des Tellers etwa dem halben Durchmesser der Hahnkugel entspricht, und daß zumindest zwei über den Umfang des Tellers äquidistant verteilte Zapfen als Formschlußelemente angeordnet sind. Die Formschlußelemente können diametral einander gegenüberliegen. Handelt es sich um drei Formschlußelemente so sind diese mit einem Winkelabstand von 120° angeordnet.

Im einzelnen bestehen im Rahmen der Erfindung mehrere Möglichkeiten der weiteren Ausbildung und Gestaltung. So kann der Teller als ebenes Bauteil ausgeführt und auf eine Abplattung an der Hahnkugel aufgesetzt sein. Es besteht aber auch die Möglichkeit, den Teller als Kugelsegment auszuführen und passend auf die Hahnkugel aufzusetzen. Um Kerbspannungen zu vermeiden, empfiehlt es sich, die Formschlußausnehmungen mit verrundeten Kanten zu versehen.

Die erreichten Vorteile sind darin zu sehen, daß bei dem erfindungsgemäßen Stellkugelhahn, auch wenn große Drehmomente für die Stellbewegung aufgebracht werden müssen, zerstörende Beanspruchungen nicht mehr auftreten. Das beruht darauf, daß erfindungsgemäß die Formschlußelemente mit großem Hebelarm angreifen und daß sie bezüglich ihrer Anzahl und Gestaltung so eingerichtet werden können, daß auch bei großen Drehmomenten kleine Flächenpressungen auftreten.

Im folgenden wird die Erfindung anhand einer lediglich ein Ausführungsbeispiel darstellenden Zeichnung ausführlicher erläutert. Es zeigen in schematischer Darstellung

Fig. 1 einen Vertikalschnitt durch einen erfindungsgemäßen Stellkugelhahn,
Fig. 2 bei entferntem Gehäuse eine Draufsicht auf den Gegenstand nach Fig. 1 aus Richtung des Pfeiles A und
Fig. 3 in gegenüber den Fig. 1 und 2 vergrößertem Maßstab den Ausschnitt B aus dem Gegenstand nach Fig. 1.

Der in den Figuren dargestellte Stellkugelhahn besteht in seinem grundsätzlichen Aufbau aus einem mehrteiligen Gehäuse 1, dem Strömungskanal 2, der Hahnkugel 3 und der Stellspindel 4. Die Stellspindel 4 faßt über Formschlußelemente 5 in komplementäre Formschlußausnehmungen 6 der Hahnkugel 3 ein. Die Hahnkugel 3 und im Ausführungsbeispiel auch in das Gehäuse 1 eingesetzte Bauteile 7, die den Strömungskanal 2 bilden, bestehen aus Ingenieurkeramik. Im übrigen ist das Gehäuse 1 mit Flanschen 8 ausgerüstet, die zum Anschluß von Verbindungsleitungen dienen.

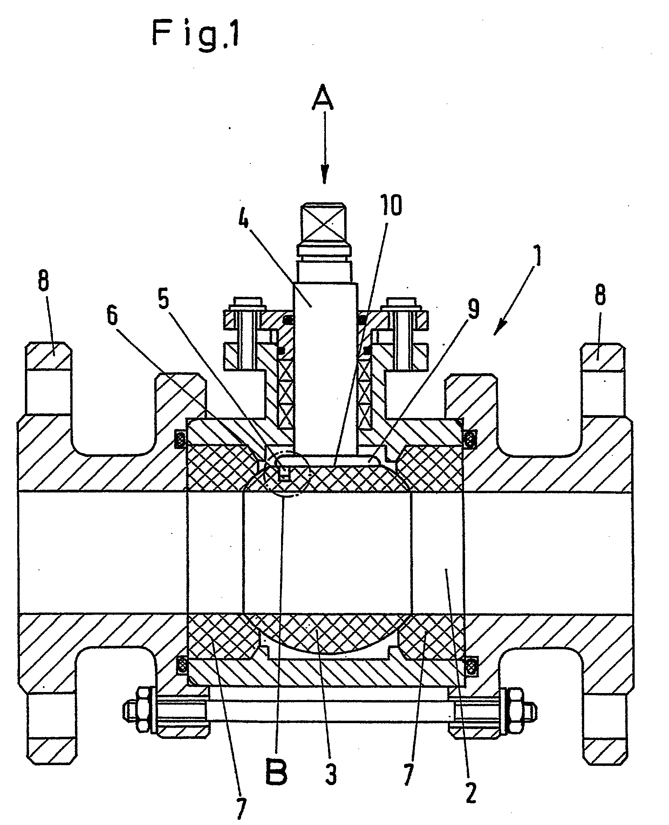

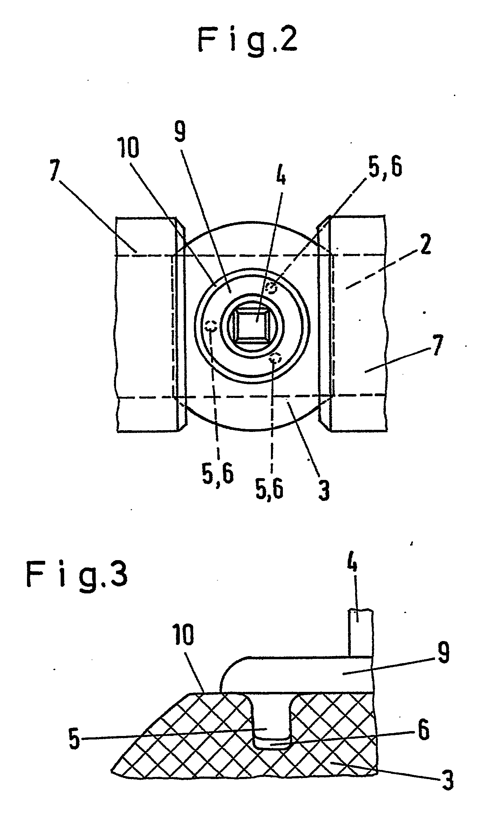

Aus einer vergleichenden Betrachtung der Fig. 1 und 2 entnimmt man, daß die Formschlußelemente 5 im Bereich des Außenrandes eines Tellers 9 angeordnet sind, der mit der Stellspindel 4 zentrisch verbunden ist. Der Durchmesser des Tellers 9 entspricht etwa dem halben Durchmesser der Hahnkugel 3. Im Ausführungsbeispiel sind drei über den Umfang des Tellers 9 äquidistant verteilte Formschlußelemente 5 und folglich auch entsprechende Formschlußausnehmungen 6 angeordnet. Der Teller 9 ist im Ausführungsbeispiel ein ebenes Bauteil und auf eine Abplattung 10 an der Hahnkugel 3 aufgesetzt. Er könnte auch als kugelkalottenförmige Kappe ausgeführt sein.

Aus der Fig. 3 entnimmt man, daß die Formschlußausnehmungen 6 verrundete Kanten aufweisen. Entsprechend ist der Strömungskanal der Hahnkugel 3 auch am Eintritt bzw. am Austritt ausgeführt oder mit Abschrägungen versehen. Es versteht sich, daß der Strömungskanal der Hahnkugel auch düsenförmig ausgeführt sein kann.

## Patentansprüche

1. Stellkugelhahn mit Gehäuse (1), Strömungskanal (2), Hahnkugel (3) und Stellspindel (4), die über mehrere Formschlußelemente (5) in komplementäre Formschlußausnehmungen (6) der Hahnkugel (3) einfaßt, wobei die Formschlußelemente (5) im Bereich des Außenrandes eines Tellers (9) angeordnet sind, der mit der Stellspindel (4) verbunden und auf einer Abplattung der Hahnkugel (3) aufgesetzt ist, dadurch gekennzeichnet, daß zumindest die Hahnkugel (3) aus Ingenieurkeramik besteht, daß der Durchmesser des Tellers (9) etwa dem halben Durchmesser der Hahnkugel (3) entspricht und daß zumindest zwei über den Umfang des Tellers (9) äquidistant verteilte Zapfen als Formschlußelemente (5) angeordnet sind.

2. Stellkugelhahn nach Anspruch 1, dadurch gekennzeichnet, daß der Teller (9) als ebenes Bauteil ausgeführt ist.

3. Stellkugelhahn nach Anspruch 1, dadurch gekennzeichnet, daß der Teller (9) als Kugelsegment ausgeführt ist.

4. Stellkugelhahn nach einem der Ansprüche 1 bis 3, dadurch gekennzeichnet, daß die Formschlußausnehmungen (6) verrundete Kanten aufweisen.

**Claims**

1. An adjustable ball valve with housing (1), flow channel (2), valve ball (3) and adjustment spindle (4) that grips by several interference-fitting units (5) into complementary interference-fitting recesses (6) of the valve ball (3), in which the inteference-fitting units (5) are located in the neighbourhood of the outer edge of a plate (9) that is connected to the adjustment spindle (4) and is superimposed on a flat surface of the valve ball (3), characterized in that at least the valve ball (3) consists of engineering ceramic, that the diameter of the plate (9) is about half the diameter of the valve ball (3), and that at least two pegs are arranged as interference-fitting units (5) equidistantly spaced around the circumference of the plate (9).

2. An adjustable ball valve according to claim 1, characterized in that the plate (9) is constructed as a flat component.

3. An adjustable ball valve according to claim 1, characterized in that the plate (9) is constructed as a spherical segment.

4. An adjustable ball valve according to one of claims 1 to 3, characterized in that the interference-fitting recesses (6) have rounded-off edges.

**Revendications**

1. Robinet à tournant sphérique avec boîte (1), passage d'écoulement (2), tournant sphérique (3) et broche de réglage (4) qui, par l'intermédiaire de plusieurs éléments à engagement positif (5), s'engage dans des évidements à engagement positif (6) complémentaires du tournant sphérique (3), les éléments à engagement positif (5) étant disposés dans la région du bord extérieur d'un disque (9) qui est relié à la broche de réglage (4) et posé sur un aplatissement du tournant sphérique (3), caractérisé par le fait qu'au moins le tournant sphérique (3) est réalisé en céramique technique; que le diamètre du disque (9) correspond sensiblement à la moitié du diamètre du tournant sphérique (3); et qu'au moins deux tourillons répartis de manière équidistante sur la circonférence du disque (9) sont disposés comme éléments à engagement positif (5).

2. Robinet à tournant sphérique selon la revendication 1, caractérisé par le fait que le disque (9) est réalisé sous la forme d'un élément plat.

3. Robinet à tournant sphérique selon la revendication 1, caractérisé par le fait que le disque (9) est réalisé sous la forme d'un segment sphérique.

4. Robinet à tournant sphérique selon l'une quelconque des revendications 1 à 3, caractérisé par le fait que les évidements à engagement positif (6) présentent des arêtes arrondies.

Fig.1

EP 0 332 831 B1

Fig.2

10 9 4 5,6
7

2

7

5,6 5,6 3

Fig.3

4

10

9

5

6

3